(19) Europäisches Patentamt
European Patent Office
Office européen des brevets

(11) Publication number: 0 057 835
B1

(12) # EUROPEAN PATENT SPECIFICATION

(45) Date of publication of patent specification: 29.04.87

(51) Int. Cl.$^4$: **B 29 C 71/04,** C 08 J 7/12

(21) Application number: 82100417.3

(22) Date of filing: 21.01.82

(54) **Shaped articles of synthetic resins having improved surface properties and method for making same.**

(30) Priority: 26.01.81 JP 9784/81
08.06.81 JP 87946/81

(43) Date of publication of application:
18.08.82 Bulletin 82/33

(45) Publication of the grant of the patent:
29.04.87 Bulletin 87/18

(84) Designated Contracting States:
DE FR GB

(56) References cited:
DE-A-2 022 052
FR-A-2 332 313
GB-A-2 025 430
US-A-3 761 299
US-A-4 091 166

PATENT ABSTRACTS OF JAPAN, vol. 4, no. 2 (C-69), 9th January 1980, p. 67C69 & JP A 54 137073

(73) Proprietor: Shin-Etsu Chemical Co., Ltd.
6-1, Ohtemachi 2-chome
Chiyoda-ku Tokyo 100 (JP)

(72) Inventor: Ueno, Susumu
9809-7, Yatabe Hazaki-cho
Kashima-gun Ibaraki-ken (JP)
Inventor: Nomura, Hirokazu
50-3, Shitte Kamisu-cho
Kashima-gun Ibaraki-ken (JP)
Inventor: Imada, Kiyoshi
2-201-9, Owada-cho Omiya-shi
Saitama-ken (JP)

(74) Representative: Jaeger, Klaus, Dipl.-Chem. Dr. et al
JAEGER & PARTNER Patentanwälte Pippinplatz 4a
D-8035 Gauting (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 057 835 B1

Courier Press, Leamington Spa, England.

**Description**

The present invention relates to a shaped article of a synthetic resin, such as a polyvinyl chloride resin and fluorocarbon resin, having improved surface properties and a method for making the same. More particularly, the invention relates to a shaped article of a synthetic resin of which the surface is remarkably insusceptible to electrostatic charging or accumulation of static electricity and a method for making such a shaped article having improved surface properties.

As is well known, shaped articles of a vinyl chloride-based resin (hereinafter referred to as PVC resin) and other synthetic resins are remarkably susceptible to the accumulation of static electricity on the surface thereof bringing about several problems of not only the dirtiness of appearance caused by the deposition or clogging of dusts on the surface but also the unpleasant influence to the human body in contact therewith by the electric shock with the static electricity accumulated on the surface and the danger of spark discharge.

Various attempts have been made to find an effective way or method for overcoming the above mentioned problems of shaped articles of a synthetic resin by the improvement of the surface properties leading to the decrease of the electrostatic charge on the surface.

For example, such an antistatic effect is obtained by coating the surface of the article with a surface active agent known to be effective as an antistatic agent. This method is advantageous when the antistatic effect is to be exhibited instantly but is defective in the relatively poor durability of the effect as well as in the sticky touch of the coated surface which eventually leads to blockage of the shaped articles with each other.

Another way to reduce the electrostatic charge on the surface of a shaped article of a synthetic resin is to admix the resin with an antistatic agent, e.g. surface active agent, before the resin is shaped into the shaped article by molding. This method is satisfactory in the durability of the antistatic effect but the effectiveness of the method is impractically low when the amount of the antistatic agent is limited. When the amount of the antistatic agent incorporated into the resin is increased to such an extent that a practically significant antistatic effect is obtained, there may also be caused problems of sticky touch on the surface leading to blocking and readiness of staining in addition to the coloring of the surface as well as the detrimental effect on the heat resistance of the shaped article if not to mention the somewhat adverse effect on the workability of the resin per se admixed with the antistatic agent in such a large amount.

In the document US—A—37 61 299 a process for the treatment of polymeric surfaces to change the characteristics of a polymeric surface (e.g. wettability, gelatine adhesion) is disclosed. The disclosed process is particularly suitable for improving the adhesion of photographic emulsions to a hydrophobic polymer support film. According to this process the film surface is subjected to exposure of a gas phase comprising an organic compound, e.g. an acid, an alcohol, an ester, an amine, a nitril or a vinyl compound having a vinyl moiety activated by an adjacent electronegative group and an activator gas, e.g. argon, helium, krypton, neon, nitrogen, radon, or xenon, which are activated by a radio frequency electromagnetic field. Organosilane compounds are not disclosed as useful organic compounds for the described process. The process is carried out under low pressure and a temperature in the range of about 10 to about 100°C. It is said that the change of properties of the polymeric surface caused by the described treatment is permanent. It is also said that the treatment would render the treated polymer surface less susceptible to accumulation of static charge. A particular feature of the process is that the treated shaped article is within the glowing of the activated gas.

JP—A—54 137 073 relates to rendering plastics molded articles both abrasion-resistant and antistatic by providing the plastics molded article with an abrasion-resistant coating film made of a partially hydrolysed condensate of an alkyl alkoxy silane and further treating the film with gas plasma. The plasma treatment is performed under reduced pressure in the presence of oxygen gas. The effect obtained by this treatment is said to be permanent. Organosilane compounds are not mentioned to be useful as components of the gas plasma.

On the other hand, there has been recently proposed a method in which the surface of a shaped article of a synthetic resin such as a PVC resin and a fluorocarbon resin can be rendered more hydrophilic when the surface is subjected to exposure to a low temperature plasma of certain kinds of inorganic or organic gases whereby the accumulation of static electricity on the surface can be reduced to some extent. This method is, however, not satisfactory due to the relatively low effectiveness and the poor durability of the effect not to warrant the practical application of the method.

In particular, fluorocarbon resins typically exemplified by polytetrafluoroethylene have outstandingly excellent chemical and thermal stability in general along with several other excellent properties such as electrical characteristics, lubricity of the surface, anti-weathering resistance and the like and various kinds of shaped articles, such as films, sheets, insulated electric wires and the like, in which the above mentioned excellent properties are fully utilized, are manufactured with the fluorocarbon resins and available on the market. For example, there has been a strong desire in recent years to have materials for electric wires with higher and higher performance and smaller and smaller size along with the progress in the electric and electronic technologies so that the consumption of fluorocarbon resins is rapidly increasing utilizing their excellent heat resistance, anti-corrosion resistance and dielectric properties for manufacturing coaxial cables, hookup wires, electric wires in aircrafts and anti-corrosion electric wires as well as electric wires for

computers, coaxial feeders for electronic parts, panel wires for telephone switchboards, electric wires for telephone circuits and the like produced in large quantities.

These fluorocarbon resins are also defectively susceptible to electrostatic charge-up. Therefore, shaped articles of fluorocarbon resins are readily stained to have unpleasant appearance by the deposition of dusts and dirts on the surface. When they are used in the electric wires for the circuits of electronic instruments and for the telephone circuits, there may sometimes be caused problems of the phenomena of noise or line confusion and dangers to human body by the electric shock or spark discharge due to the accumulated static electricity.

In order to prevent such a phenomenon of static charging or accumulation of static electricity on the surface of the shaped articles of fluorocarbon resins, attempts have been made to increase the affinity of the surface to water by the treatment with corona discharge or low temperature plasma whereby to reduce the static charge. The effectiveness of these methods is, however, limited and no satisfactory results can be obtained by the method undertaken alone. Alternatively, attempts have been made to introduce hydrophilic functional groups on to the surface of the shaped articles of the fluorocarbon resins by the treatment with chemical reagents or treatment by irradiating with actinic rays such as electron beams, ultraviolet light, ionizing radiations and the like to obtain surface grafting or oxidation of the surface thereby to reduce the static electricity. These methods are also unsatisfactory since the process of the treatment is complicated in addition to the also insufficient antistatic effect obtained by the method.

Thus, an object of the present invention is to provide an improved shaped article of a synthetic resin advantageously insusceptible to the electrostatic charging or accumulation of static electricity on the surface, in which the antistatic effect is so complete and so durable that the above described problems or shortcomings in the prior art shaped articles of synthetic resins can be overcome by a relatively simple means.

The shaped article of a synthetic resin having the above mentioned advantageous surface properties provided as a result of the extensive investigations undertaken by the inventors comprises a surface layer having been subjected to the exposure to the atmosphere of low temperature plasma generated in the gaseous phase of an organosilane compound represented by the general formula

$$R_aH_bSiX_{4-a-b},$$

in which R is a substituted or unsubstituted monovalent hydrocarbon group, X is a halogen atom or an alkoxy group, a is a number of 1, 2 or 3 and b is a number of 0 or 1 with the proviso that a+b is 1, 2 or 3, or a hydrolysis condensation product thereof.

The above described shaped article of a synthetic resin having a surface layer of improved antistatic property is very advantageous in comparison with conventional shaped articles of synthetic resins with a surface layer having been treated by the low temperature plasma of a conventional organic or inorganic gas in respect of the unexpectedly high antistatic effect as well as of the durability or permanency of the antistatic effect.

The above mentioned outstanding advantages of the present invention are probably due to the fact that the surface layer of the shaped article, though extremely thin, formed and modified by the plasma treatment in a specific gaseous atmosphere adheres very firmly to the body of the shaped article and exhibits extraordinarily high antistatic effect although the true chemical or physical nature of the thus modified surface layer is not well understood in the present status of the scientific or technological knowledge. In particular, it should at least be noted that the velocity for the formation of the modified surface layer is much larger in the plasma treatment in the atmosphere of the specific organosilicon compound than in the atmosphere of a conventional organic or inorganic gas so that the shaped articles of the present invention can be produced very efficiently.

In the first place, the synthetic resins, of which the shaped articles of the present invnetion are made, are, of course, not limited to vinyl chloride-based resins and fluorocarbon resins but include any kinds of thermoplastic and thermosetting resins known in the art such as low and high-density polyethylenes, polypropylenes, polystyrenes, copolymers of acrylonitrile and styrene, saturated and unsaturated polyester resins, polycarbonate resins, polyamide resins, polyacetates, acrylic and methacrylic resins, polyvinyl alcohols, copolymers of acrylonitrile, styrene and butadiene, polyimide resins, polysulfone resins, polyurethane resins, copolymers of ethylene and vinyl acetate, polyamideimide resins, polyacetals, poly-p-xylene resins, epoxy resins, polydiallyl phthalate resins and the like.

The above mentioned vinyl chloride-based resin is not limited to the homopolymeric polyvinyl chloride resins but also includes copolymeric resins of vinyl chloride and one or more of copolymerizable monomers as well as polymer blends containing a homo- or copolymeric vinyl chloride resin provided major monomeric constituent, say, 50% by weight or more, is vinyl chloride. The monomers copolymerizable with vinyl chloride are well known in the art of polymer technology and exemplified by vinyl esters, vinyl ethers, acrylic and methacrylic acids as well as esters thereof, maleic and fumaric acids and esters thereof, maleic anhydride, aromatic vinyl compounds, vinylidene halides, acrylonitrile, methacrylonitrile and olefins such as ethylene, propylene and the like.

The vinyl chloride-based resin may be compounded with various kinds of compounding ingredients or additive agents before shaping into articles according to need. For example, plasticizers used for

controlling the flexibility or rigidity of the shaped article are exemplified by phthalic acid ester such as dioctyl phthalate, dibutyl phthalate and butyl benzyl phthalate, esters of dibasic acids such as dioctyl adipate and dibutyl sebacate, esters of pentaerythritol, glycol esters such as diethyleneglycol dibenzoate, fatty acid esters such as methyl acetylricinolate, esters of phosphoric acid such as tricresyl phosphate and triphenyl phosphate, epoxidized oils such as epoxidized soybean oil and epoxidized linseed oil, esters of citric acid such as acetyl tributylcitrate and acetyl trioctylcitrate, polyester compounds such as trialkyl trimellitate, tetra-n-octyl pyromellitate, polypropylene adipate and the like, and other various kinds of plasticizers.

Further, lubricity, stability and other properties of shaped articles of a vinyl chloride-based resin can be improved by formulating an additive agent exemplified by metal salts of carboxylic acids such as calcium stearate, zinc stearate, lead stearate, barium stearate and cadmium stearate, dibasic lead phosphite, organic tin compounds such as dibutyltin dilaurate, di-n-octyltin maleate and di-n-octyltin mercaptide, ester compounds such as butyl stearate, fatty acid amides such as ethylene bisstearoamide, higher fatty acids and esters thereof, polyethylene waxes and the like. Other kinds of additives conventionally used in the fabrication of shaped articles of vinyl chloride-based resins may of course be used including fillers, heat stability improvers, antioxidants, ultraviolet absorbers, antistatic agents, anti-fogging agents, pigments, dyes, crosslinking aids and the like.

When the shaped article of the present invention is made of a polymer blend of a vinyl chloride-based resin, the polymer blend may be prepared with a vinyl chloride-based resin and a rubbery elastomer such as copolymers of ethylene and vinyl acetate, copolymers of acrylonitrile and butadiene, copolymers of styrene and acrylonitrile, copolymers of methyl methacrylate, styrene and butadiene, copolymers of acrylonitrile, styrene and butadiene, urethane elastomers, polyamide resins, terpolymers of ethylene, propylene and a diene and epoxy-modified polybutadiene resins. In any way, the amount of these rubbery polymers should not be excessively large and, preferably, should not exceed 50 parts by weight per 100 parts by weight of the vinyl chloride-based resin.

The method for fabricating the above described vinyl chloride-based resins into shaped articles is conventional such as extrusion molding, injection molding, calendering, inflation, compression molding and the like and the types and forms of the shaped articles are not particularly limitative.

The fluorocarbon resins of which the shaped articles of the present invention are made also include various kinds of homopolymers and copolymers containing fluorine atoms bonded to the carbon atoms in the molecule. All of the conventional fluorocarbon resins are suitable for shaping the articles of the present invention including polytetrafluoroethylene resins, poly(chlorotrifluoroethylene) resins, polyvinylidene fluoride resins, polyvinyl fluoride resins, copolymers of tetrafluoroethylene and hexafluoropropene, copolymers of tetrafluoroethylene and a perfluoroalkyl vinyl ether, copolymers of tetrafluoroethylene and ethylene, copolymers of chlorotrifluoroethylene and ethylene, copolymers of vinylidene fluoride and hexafluoroisobutene and copolymers of fluoroethylene and fluoropropylene.

The method for fabricating these fluorocarbon resins into shaped articles may be conventional in the art such as compression molding, ram extrusion, paste extrusion, calendering, dispersion method, melt molding and the like. The types and forms of the shaped articles are also not particularly limitative including films, sheets, tubes and rods as well as the covering layer of insulated electric wires. Further, the fluorocarbon resins may be compounded with various kinds of additives used conventionally in the shaped articles of a fluorocarbon resin including fillers such as glass fibers, graphite powders, molybdenum disulfide, bronze powders and the like, surface active agents, emulsifiers, stabilizers and plasticizers such as fluorocarbon oils. These additives scarcely affect the accomplishment of the antistatic effect of the inventive shaped articles.

The shaped article of a synthetic resin, e.g. vinyl chloride-based resins and fluorocarbon resins described above, is then subjected to exposure to the atmosphere of low temperature plasma of a specified organosilicon compound in the gaseous phase. The organosilicon compound is an organosilane represented by the above given general formula, in which R denotes a monovalent hydrocarbon group exemplified by alkyl groups such as methyl, ethyl, propyl and butyl groups, alkenyl groups such as vinyl and allyl groups, alkynyl groups such as ethynyl, propynyl and butynyl groups and aryl groups such as phenyl and naphthyl groups. The group R may also be a substituted hydrocarbon group obtained by partially replacing the hydrogen atoms in the above named hydrocarbon groups with substituent atoms or groups such as halogen atoms and cyano groups. The symbol X in the general formula denotes a halogen atom such as chlorine and bromine or an alkoxy group such as methoxy, ethoxy, propoxy and butoxy groups. By definition of the symbols a and b which denotes numbers of 1, 2 or 3 and 0 or 1, respectively, with the proviso that a+b is 1, 2 or 3, the silane compound has at least one group denoted by R and at least one atom or group denoted by X in a molecule. The silane compound has a hydrogen atom directly bonded to the silicon atom when b is 1.

Particular examples of the organosilane compounds in conformity with the general formula and the definitions of the symbols are as follows. Firstly, those silane compounds expressed by the general formula $R_3SiX$ are exemplified by trimethylchlorosilane, trimethylmethoxysilane, trimethylethoxysilane, vinyldimethylchlorosilane, vinyldimethylmethoxysilane, vinyldimethylethoxysilane, ethynyldimethylchlorosilane, ethynyldimethylmethoxysilane, triethylmethoxysilane, dimethyl chloromethyl chlorosilane, dimethyl chloromethyl methoxysilane, dimethyl chloromethyl ethoxysilane, dimethyl phenyl

methoxysilane, 2-chloroethynyl dimethyl chlorosilane and 2-chloroethyl dimethyl methoxysilane. Secondly, the silane compounds expressed by the general formula $R_2SiX_2$ are exemplified by dimethyl dichlorosilane, dimethyl dimethoxysilane, diethyl dimethoxysilane, dimethyl diethoxysilane, vinyl methyl dichlorosilane, vinyl methyl dimethoxysilane, 2-chloroethyl methyl dimethoxysilane, vinyl methyl diethoxysilane, chloromethyl methyl dichlorosilane, methyl phenyl dimethoxysilane and chloromethyl methyl dimethoxysilane. Thirdly, the silane compounds expressed by the general formula $RSiX_3$ are exemplified by methyl trimethoxysilane, methyl triethoxysilane, vinyl trimethoxysilane, phenyl trimethoxysilane, chloromethyl trimethoxysilane and 2-chloroethyl trimethoxysilane.

Further, the silane compound may have a hydrogen atom directly bonded to the silicon atom so that the silane compound is expressed by the general formula of $RHSiX_2$ or $R_2HSiX$. The above given examples of the silane compounds are limited to those compounds in which X is an alkoxy group or a chlorine atom but the chlorine atoms can be replaced with bromine atoms or other halogen atoms.

In addition to the above named organosilane compounds as the examples of the organosilicon compounds to form the plasma atmosphere, the organosilicon compound may be a hydrolysis condensation product of the organosilane compound such as divinyl tetramethyldisiloxane, di(chloromethyl) tetramethyldisiloxane, diethynyl tetramethyldisiloxane, tetramethyldisiloxane and the like. Other kinds of hydrolysis condensation products of silane compounds may be used provided that the compound has a sufficiently high vapor pressure to support the generation of the low temperature plasma in the atmosphere.

When the shaped articles of a synthetic resin are exposed to the atmosphere of low temperature plasma, the article is placed in a plasma chamber and low temperature plasma is generated in the chamber while the pressure inside the chamber is kept at 13.3 mbar (10 Torr) or below with the vapor of the organosilicon compound being passed through the chamber so as to expose the surface of the shaped article to the atmosphere of the low temperature plasma. It is optional that the vapor of the organosilicon compound is diluted with other kinds of vapors or gases including inorganic gases such as rare gases, e.g. helium and argon, nitrogen, oxygen, air, hydrogen, water vapor, carbon dioxide and carbon monoxide and organic gases other than organosilicon compounds.

In the above mentioned treatment of the inventive shaped article with low temperature plasma, the pressure of the organosilicon compound in the plasma chamber should be 13.3 mbar (10 Torr) or below since the treated shaped article cannot be imparted with satisfactory antistatic effect when the pressure of the organosilicon compound in the plasma atmosphere exceeds 13.3 mbar. In particular, the pressure is preferably in the range from 0.0067 to 1.33 mbar (0.005 to 1 Torr) in order to obtain excellent antistatic effect. The antistatic improvement of the surface is rapidly reduced with the increase of the pressure of the organosilicon compound over 10 Torr with increased surface resistivity. This trend in the antistatic effect in relation to the pressure is never expected from the knowledges obtained in the conventional plasma polymerization or plasma treatment procedures.

Low temperature plasma is readily generated in the plasma chamber by supplying a high frequency electric power of, for example, 10 watts to 100 kilowatts between the electrodes at a frequency of 10 kHz to 100 MHz. The types of the electrodes are not particularly limitative including inside electrodes and exterior electrodes. Sufficient improvement of the surface properties can be obtained irrespective of the type of the electric discharge which may be the glow discharge or corona discharge. The optimum length of time for the plasma treatment largely depends on various parameters such as the power supply for the plasma generation, kind of the synthetic resin, shape of the article under treatment and others but it is usually in the range from a few seconds to several tens of minutes.

Meanwhile, it is optional to use two kinds or more of the organosilicon compounds simultaneously as combined in the plasma atmosphere whereby certain synergistic effects can be expected in some cases. In addition, it is sometimes effective to admix the vapor of the organosilicon compound with other organic and/or inorganic gases whereby more lasting and durable antistatic effect may be obtained with decreased surface resistivity of the shaped articles along with improvements in the wettability, printability, susceptibility to adhesive bonding and other properties.

In the following, examples are given to illustrate the preparation and evaluation of the inventive shaped articles of synthetic resins in the form of sheets. The evaluation of the inventive shaped articles, i.e. sheets, was undertaken in three ways by the measurements of the distance of cigarette ash attraction to the surface of the sheet electrostatically charged by rubbing, surface resistivity and the charge voltage of the rubbed surface. The procedures for the measurements were as follows.

Distance of cigarette ash attraction: the surface of the resin sheet was rubbed 10 times with a dry cotton cloth and brought toward cigarette ash to determine the distance in cm between the rubbed surface and the ash at which the ash was first attracted to the surface. The measurements were conducted at 25°C in an atmosphere of 60% relative humidity.

Surface resistivity: measurements were conducted by use of a measuring instrument Model SM-10 made by Toa Denpa Kogyo Co.

Charge voltage by rubbing: the voltage of the static electricity accumulated on the surface of the resin sheet was determined after the surface of the resin sheet was rubbed with a cotton cloth for 60 seconds by use of a rotary static tester made by Koa Shokai Co. rotating at 750 r/min under a load of 200 g.

In the following examples, the inventive shaped articles, i.e. sheets of the synthetic resins, were either

a sheet of a vinyl chloride-based resin prepared by the inventors or a sheet of a fluorocarbon resin purchased on the market although the scope of the present invention is not limited to these types of resins.

Resin sheet A: a resin compound composed of 100 parts by weight of a polyvinyl chloride resin, 3 parts by weight of a stabilizer containing barium and zinc and 0.2 part by weight of a stearic acid amide-based lubricant was kneaded at 175°C for 10 minutes in a roller and then press-molded at 180°C into a sheet of 0.5 mm thickness.

Resin sheet B: a resin compound composed of 100 parts by weight of a polyvinyl chloride resin, 15 parts by weight of di(2-ethylhexyl) phthalate as a plasticizer, 3 parts by weight of dibutyltin dimercaptide, 2 parts by weight of epoxidized soybean oil and 0.2 part by weight of stearic acid was kneaded in a roller at 165°C for 10 minutes and then press-molded at 170°C into a sheet of 0.3 mm thickness.

Resin sheet C: a resin compound composed of 100 parts by weight of a copolymeric resin of vinyl chloride and vinyl acetate (SC-400G, a product by Shin-Etsu Chemical Co., Japan), 1 part by weight of an epoxy-modified soybean oil, 1 part by weight of dibutyltin dimercaptide, 0.5 part by weight of calcium stearate and 1 part by weight of carbon black was kneaded in a roller at 150°C for 10 minutes and then pressmolded at 155°C into a sheet of 0.5 mm thickness.

Resin sheet D: a commercially available sheet of polytetrafluoroethylene (Teflon TFE, a product by E.I. DuPont Co.).

Resin sheet E: a commercially available sheet of polyvinyl fluoride (Tedlar, a product by E.I. DuPont Co.).

Resin sheet F: a commercially available sheet of a copolymer of tetrafluoroethylene and ethylene (Aflex, a product by Asahi Glass Co.).

Example 1

The resin sheet A was placed in the plasma chamber of an apparatus for plasma generation and, after evacuation to a pressure of $10^{-5}$ mbar air, was introduced into the plasma chamber and the pressure inside the plasma chamber was controlled and maintained at 0.1 mbar under a continuous flow of the air. Thereafter, vapor of trimethylchlorosilane was introduced into the plasma chamber to be mixed with the flowing air continuously whereby the partial pressures of the air and the trimethylchlorosilane vapor were controlled and maintained at 0.1 mbar and 0.1 mbar, respectively, with both of the gases continuously flowing through the chamber.

Low temperature plasma was generated across the atmosphere controlled in the above described manner by supplying a high frequency electric power of 200 watts at 13.56 MHz and the surface of the resin sheet was exposed to the atmosphere of low temperature plasma for 2 minutes. The results of the measurements undertaken with this plasma-treated resin sheet are shown in Table 1 below together with the results obtained with the same resin sheet before the plasma treatment.

Example 2

Plasma treatment of the resin sheet A was undertaken under substantially the same conditions as in Example 1 except that the pressure inside the plasma chamber was controlled and maintained at 0.07 mbar with continuous flow of the vapor of vinyl dimethyl chlorosilane after evacuation to a pressure of $10^{-4}$ mbar without air flow and the time for the plasma treatment was extended to 5 minutes. The results of the measurements with this plasma-treated resin sheet A are shown in Table 1.

Examples 3 to 5

The resin sheet A was placed in the plasma chamber and, after evacuation to a pressure of $10^{-5}$ mbar, nitrogen gas was introduced into the plasma chamber. The pressure inside the chamber was controlled and maintained at 0.1 mbar with continuous flow of nitrogen gas therethrough. Thereafter, vapor of trimethyl methoxysilane was introduced into the chamber as mixed with the nitrogen gas so that the partial pressure of nitrogen gas in the chamber was 0.1 mbar and the partial pressure of the silane vapor was 0.4, 1.2 or 2.0 mbar for Examples 3, 4 and 5, respectively, with constant flow of these gases or vapors. Low temperature plasma was generated in the plasma chamber by supplying a high frequency electric power of 2 kilowatts at 110 kHz for 30 seconds to expose the surface of the resin sheet to the plasma atmosphere.

The results of the measurements undertaken with these plasma-treated resin sheets are shown in Table 1.

Example 6

Plasma treatment of the resin sheet A was undertaken under substantially the same conditions as in Example 1 except that the atmosphere inside the plasma chamber was controlled and maintained to have a partial pressure of argon gas of 0.3 mbar and a partial pressure of dimethyl dimethoxysilane vapor of 0.3 mbar and the time for the plasma treatment was extended to 4 minutes. The results of the measurements undertaken with this plasma-treated resin sheet are shown in Table 1.

Example 7

Plasma treatment of the resin sheet B was undertaken under substantially the same conditions as in Example 1 except that the atmosphere inside the plasma chamber was controlled and maintained to have a

partial pressure of air of 0.1 mbar and a partial pressure of dimethyl dichlorosilane of 0.7 mbar and the high frequency electric power was increased to 300 watts with extension of the time for the plasma treatment to 3 minutes. The results of the measurements undertaken with this plasma-treated resin sheet are shown in Table 1 together with the results obtained with the same resin sheet before plasma treatment.

Example 8

Plasma treatment of the resin sheet B was undertaken under substantially the same conditions as in Example 1 except that the atmosphere inside the plasma chamber was controlled and maintained to have a pressure of vapor of dimethyl dichlorosilane of 0.07 mbar with constant flow of the vapor therethrough after evacuation to a pressure of $10^{-4}$ mbar and the time for the plasma treatment was extended to 5 minutes. The results of the measurements undertaken with this plasma-treated resin sheet are shown in Table 1.

Example 9

Plasma treatment of the resin sheet B was undertaken under substantially the same conditions as in Example 1 except that the atmosphere inside the plasma chamber was controlled and maintained to have a partial pressure of dry air of 0.1 mbar and a partial pressure of vinyl methyl dimethoxysilane vapor of 0.1 mbar. The results of the measurements undertaken with this plasma-treated resin sheet are shown in Table 1.

Example 10

Plasma treatment of the resin sheet B was undertaken under substantially the same conditions as in Example 1 except that the atmosphere inside the plasma chamber was controlled and maintained to have a partial pressure of carbon dioxide of 0.01 mbar and a partial pressure of methyl trimethoxysilane vapor of 0.3 mbar and the high frequency electric power was decreased to 100 watts with extension of the time for the plasma treatment to 10 minutes. The results of the measurements undertaken with this plasma-treated resin sheet are shown in Table 1.

Example 11

Plasma treatment of the resin sheet C was undertaken under substantially the same conditions as in Example 1 except that the atmosphere inside the plasma chamber was controlled and maintained to have a partial pressure of argon gas of 0.07 mbar and a partial pressure of phenyl trimethoxysilane vapor of 0.07 mbar. The results of the measurements undertaken with this plasma-treated resin sheet are shown in Table 1 together with the results obtained with the same resin sheet before plasma treatment.

Example 12

Plasma treatment of the resin sheet C was undertaken under substantially the same conditions as in Example 1 except that the atmosphere inside the plasma chamber was controlled and maintained to have a partial pressure of air of 0.1 mbar and a partial pressure of divinyl tetramethyldisiloxane vapor of 0.1 mbar and the high frequency electric power was increased to 300 watts with decrease of the time for the plasma treatment to 1 minute. The results of the measurements undertaken with this plasma-treated resin sheet are shown in Table 1.

Example 13

Plasma treatment of the resin sheet D was undertaken under substantially the same conditions as in Example 1 except that the atmosphere inside the plasma chamber was controlled and maintained to have a partial pressure of air of 0.1 mbar and a partial pressure of trimethyl chlorosilane vapor of 0.1 mbar with constant flow of air and the vapor therethrough after evacuation to a pressure of $10^{-4}$ mbar and the high frequency electric power was increased to 300 watts. The results of the measurements undertaken with this plasma-treated resin sheet are shown in Table 1 together with the results obtained with the same resin sheet before plasma treatment.

Example 14

Plasma treatment of the resin sheet D was undertaken under substantially the same conditions as in Example 1 except that the atmosphere inside the plasma chamber was controlled and maintained to have a pressure of vinyl dimethyl chlorosilane vapor of 0.07 mbar with constant flow of the vapor therethrough after evacuation of the chamber to a pressure of $10^{-4}$ mbar and the time for the plasma treatment was extended to 5 minutes. The results of the measurements undertaken with this plasma-treated resin sheet are shown in Table 1.

Examples 15 to 17

Plasma treatment of the resin sheet D was undertaken in a similar manner to Example 1. In this case, the atmosphere inside the plasma chamber was controlled and maintained to have a partial pressure of nitrogen gas of 0.1 mbar and a partial pressure of trimethyl methoxysilane vapor of 0.5, 1.3 or 2.3 mbar for Examples 15, 16 and 17, respectively, and the low temperature plasma was generated for 30 seconds by

supplying a high frequency electric power of 2 kilowatts at 110 kHz. The results of the measurements undertaken with these plasma-treated resin sheets are shown in Table 1.

Example 18

Plasma treatment of the resin sheet E was undertaken under substantially the same conditions as in Example 1 except that the atmosphere inside the plasma chamber was controlled and maintained to have a partial pressure of argon gas of 0.3 mbar and a partial pressure of dimethyl dimethoxysilane vapor of 0.3 mbar with constant flow of the gas and vapor therethrough after evacuation of the chamber to a pressure of 0.01 mbar and the time for the plasma treatment was extended to 4 minutes. The results of the measurements undertaken with this plasma-treated resin sheet are shown in Table 1 together with the results obtained with the same resin sheet before plasma treatment.

Example 19

Plasma treatment of the resin sheet E was undertaken under substantially the same conditions as in Example 1 except that the atmosphere inside the plasma chamber was controlled and maintained to have a partial pressure of air of 0.1 mbar and a partial pressure of dimethyl dichlorosilane vapor of 0.7 mbar and the high frequency electric power was increased to 300 watts with the extension of the time for the plasma treatment to 3 minutes. The results of the measurements undertaken with this plasma-treated resin sheet are shown in Table 1.

Example 20

Plasma treatment of the resin sheet E was undertaken under substantially the same conditions as in Example 1 except that the atmosphere inside the plasma chamber was controlled and maintained to have a pressure of dimethyl dichlorosilane vapor of 0.007 with constant flow of the vapor therethrough after evacuation of the chamber to a pressure of $10^{-4}$ mbar and the time for the plasma treatment was extended to 5 minutes. The results of the measurements undertaken with this plasma-treated resin sheet are shown in Table 1.

Example 21

Plasma treatment of the resin sheet F was undertaken under substantially the same conditions as in Example 1 except that the atmosphere inside the plasma chamber was controlled and maintained to have a partial pressure of dry air of 0.1 mbar and a partial pressure of vinyl methyl dimethoxysilane vapor of 0.1 mbar. The results of the measurements undertaken with this plasma-treated resin sheet are shown in Table 1 together with the results obtained with the same resin sheet before the plasma treatment.

Example 22

Plasma treatment of the resin sheet F was undertaken under substantially the same conditions as in Example 1 except that the atmosphere inside the plasma chamber was controlled and maintained to have a partial pressure of carbon dioxide gas of 0.01 mbar and a partial pressure of methyl trimethoxysilane vapor of 0.3 mbar and the high frequency electric power was decreased to 100 watts with the extension of the time for the plasma treatment to 10 minutes. The results of the measurements undertaken with this plasma-treated resin sheet are shown in Table 1.

Example 23

An electric wire insulated with Aflex resin for wrapping connection in computers was placed in the plasma chamber and, after evacuation to a pressure of 0.001 mbar, the pressure inside the chamber was controlled and maintained at 0.1 mbar with constant flow of air therethrough. Thereafter, vapor of vinyl dimethyl methoxysilane was introduced into the plasma chamber as mixed with the leaking air so that the atmosphere inside the chamber was controlled and maintained to have a partial pressure of air of 0.07 mbar and a partial pressure of the silane vapor of 0.07 mbar. Low temperature plasma was generated in the plasma chamber by supplying a high frequency electric power of 2 kilowatts at 13.56 MHz for 30 seconds to expose the surface of the insulated electric wire to the plasma atmosphere.

The surface resistivity of the thus plasma-treated insulated wire was $2\times10^{9}$ ohm while the surface resistivity of the wire before plasma treatment was $6\times10^{14}$ ohm indicating substantial improvement in the surface properties.

Example 24

A high-tension ignition cable for aircraft insulated with Teflon TFE resin was placed in the plasma chamber and, after evacuation of the chamber to a pressure of 0.001 mbar, vapor of dimethyl chloromethyl chlorosilane was introduced into the chamber so that the atmosphere inside the chamber was controlled and maintained to have a pressure of 0.1 mbar with constant flow of the silane vapor therethrough. Low temperature plasma was generated in the plasma chamber by supplying a high frequency electric power of 200 watts at 13.56 MHz for 5 minutes to expose the surface of the cable to the low temperature plasma.

The surface resistivity of the thus plasma-treated cable was $3\times10^{9}$ ohm while the surface resistivity of the same cable before plasma treatment was $1\times10^{15}$ ohm indicating substantial improvement in the antistatic performance of the surface of the cable.

TABLE 1

| Example no. | Resin sheet | Distance of cigarette ash attraction, cm | Surface, resistivity, ohm | Charge voltage by rubbing, volts |
|---|---|---|---|---|
| Before plasma treatment | A | 6 | $7\times10^{15}$ | 7200 |
| | B | 6 | $8\times10^{15}$ | 7900 |
| | C | 6 | $1\times10^{15}$ | 6600 |
| | D | 7 | $6\times10^{16}$ | 9600 |
| | E | 7 | $8\times10^{16}$ | 8900 |
| | F | 7 | $7\times10^{16}$ | 9400 |
| 1 | A | 0 | below $10^{10}$ | 50 |
| 2 | | 0 | $2\times10^{10}$ | 100 |
| 3 | | 0 | $2\times10^{10}$ | 150 |
| 4 | | 2 | $4\times10^{12}$ | 1100 |
| 5 | | 3 | $3\times10^{13}$ | 1600 |
| 6 | | 0 | below $10^{10}$ | 200 |
| 7 | B | 1 | $6\times10^{11}$ | 700 |
| 8 | | 2 | $1\times10^{12}$ | 1200 |
| 9 | | 0 | below $10^{10}$ | 60 |
| 10 | | 0 | below $10^{10}$ | 100 |
| 11 | C | 0 | $2\times10^{10}$ | 130 |
| 12 | | 0 | below $10^{10}$ | 80 |
| 13 | D | 0 | $1\times10^{8}$ | 70 |
| 14 | | 0 | $2\times10^{9}$ | 250 |
| 15 | | 0 | $8\times10^{9}$ | 260 |
| 16 | | 2 | $5\times10^{11}$ | 1850 |
| 17 | | 3 | $6\times10^{12}$ | 2700 |
| 18 | E | 0 | $8\times10^{9}$ | 300 |
| 19 | | 1 | $9\times10^{10}$ | 500 |
| 20 | | 2 | $1\times10^{11}$ | 1600 |
| 21 | F | 0 | $7\times10^{9}$ | 80 |
| 22 | | 0 | $6\times10^{9}$ | 150 |

**Claims**

1. A shaped article of a synthetic resin insusceptible to the accumulation of static electricity on the surface which had been subjected to exposure to the atmosphere of a low temperature plasma generated in the gaseous phase containing an organic gas characterized in that the organic gas in the gaseous phase is an organosilane compound reprensented by the general formula

$$R_aH_bSiX_{4-a-b},$$

in which R is a substituted or unsubstituted monovalent hydrocarbon group, X is a halogen atom or an alkoxy group, a is a number of 1, 2 or 3 and b is a number of 0 or 1 with the proviso that a+b is 1, 2 or 3, or a hydrolysis condensation product thereof.

2. The shaped article of a synthetic resin as claimed in claim 1 wherein the pressure or the partial pressure of the organosilane compound or the hydrolysis condensation product thereof contained in the gaseous phase is in the range from 0.0067 to 1.33 mbar (0.005 to 1 Torr).

3. The shaped article of a synthetic resin as claimed in claim 1 wherein R is an alkyl group, an alkenyl group or an aryl group.

4. The shaped article of a synthetic resin as claimed in claim 1 wherein the organosilane compound or the hydrolysis condensation product thereof contained in the gaseous phase is diluted with an inorganic gas selected from the group consisting of helium, argon, nitrogen, oxygen, air, hydrogen, water vapor, carbon dioxide and carbon monoxide.

**Patentansprüche**

1. Formkörper aus einem synthetischen Harz, dessen Oberfläche antistatisch ist und der der Atmosphäre eines kalten Plasmas ausgesetzt wurde, wobei das Plasma in einer gasförmigen, ein organisches Gas enthaltenden Phase erzeugt wird, dadurch gekennzeichnet, daß das organische Gas in der Gasphase ein Organosilan mit der folgenden allgemeinen Formel ist

$$R_aH_bSiX_{4-a-b}$$

in der R eine substituierte oder unsubstituierte einwertige Kohlenwasserstoffgruppe, X ein Halogenatom der eine Alkoxygruppe, a 1, 2 oder 3 und b 0 oder 1 ist, unter der Voraussetzung, daß a+b 1, 2 oder 3 ist, oder daß es sich um ein Hydrolysekondensationsprodukt einer solchen Verbindung handelt.

2. Formkörper aus einem synthetischen Harz nach Anspruch 1, wobei der Druck oder der Partialdruck des Organosilans oder dessen Hydrolysekondensationsproduktes in der Gasphase im Bereich zwischen 0,0067 und 1,33 mbar (0.005 bis 1 Torr) liegt.

3. Formkörper aus einem synthetischen Harz nach Anspruch 1, wobei R eine Alkylgruppe, eine Alkenylgruppe oder eine Arylgruppe ist.

4. Formkörper aus einem synthetischen Harz nach Anspruch 1, wobei das Organosilan oder dessen Hydrolysekondensationsprodukt in der Gasphase mit einem anorganischen Gas, und zwar Helium, Argon, Stickstoff, Sauerstoff, Luft, Wasserstoff, Wasserdampf, Kohlendioxid oder Kohlenmonoxid, verdünnt wird.

**Revendications**

1. Article façonné en résine synthétique non sujet à l'accumulation d'électricité statique sur sa surface, qui à été soumis à une exposition à une atmosphère d'un plasma à basse température engendré en phase gazeuse, contenant un gaz organique, caractérisé en ce que le gaz organique dans la phase gazeuse est un composé organosilane représenté par la formule générale:

$$R_aH_bSi\ X_{4-a-b}$$

dans laquelle R est un groupe hydrocarbure monovalent substitué ou non substitué, X est un atome d'halogène ou un groupe alcoxy, a est un nombre égal à 1, 2 ou 3, et b est un nombre 0 ou 1, avec la condition que a+b est égal à1, 2 ou 3, ou un produit de condensation et d'hydrolyse dudit composé.

2. Article façonné en résine synthétique selon la revendication 1 dans lequel la pression ou la pression partielle du composé organosilane, ou de son produit de condensation et d'hdyrolyse, en phase gazeuse est comprise entre 0,0067 et 1,33 mbar (0,005 à 1 Torr).

3. Article façonné en résine synthétique selon la revendication 1, dans lequel R est un groupe alkyle, un groupe alkenyl ou un groupe aryl.

4. Article façonné en résine synthétique selon la revendication 1 dans lequel le composé organosilane ou son produit de condensation et d'hydrolyse, contenu dans la phase gazeuse est dilué avec un gaz inorganique choisi dans le groupe qui comprend l'helium, l'argon, l'azote, l'oxygène, l'air, lhydrogène, la vapeur d'eau, le bioxyde de carbon et le monoxyde de carbone.